# EUROPÄISCHE PATENTSCHRIFT

(11) **EP 0 887 170 B1**
(45) Veröffentlichungstag und Bekanntmachung des Hinweises auf die Patenterteilung: **26.03.2003**
(21) Anmeldenummer: 98810545.8
(22) Anmeldetag: 15.06.1998
(51) Int. Cl.: B29C 45/16, B29C 49/22

(54) **Verfahren zum Herstellen eines Vorformlings sowie Vorformling zum Blasformen eines Behälters**
Method for producing a preform as well as preform for blow moulding a container
Procédé pour fabriquer une préforme ainsi que préforme pour mouler par soufflage un récipient

(30) Priorität: 27.06.1997 CH 157997
(43) Veröffentlichungstag der Anmeldung: 30.12.1998
(73) Patentinhaber: Altoplast AG, 8754 Netstal (CH)
(72) Erfinder: Schöpf, Karl, 8758 Obstalden (CH); Diener, Norbert, 8758 Obstalden (CH)
(74) Vertreter: Groner, Manfred

(56) Entgegenhaltungen:
- EP-A- 0 199 633
- EP-A- 0 380 215
- EP-A- 0 624 449
- EP-A- 0 655 306
- "BOTTLES GO GREEN" EUROPEAN PLASTICS NEWS, Bd. 23, Nr. 2, Februar 1996, Seite 29/30 XP000590050

## Beschreibung

Die Erfindung betrifft ein Verfahren zum Herstellen eines Vorformlings in einer Spritzgussform, wobei in einen Formhohlraum eine vorbestimmte Menge eines ersten Materials eingespritzt wird und zur Bildung eines Kerns im gespritzten ersten Material eine vorbestimmte Menge eines Rezyklats in diesen Formhohlraum eingespritzt wird. Die Erfindung betrifft zudem einen Vorformling zum Blasformen eines Behälters mit einem als Hals ausgebildeten Bereich, einem einen Rumpf bildenden Bereich und einen Boden bildenden Bereich, mit einem Kern aus rezykliertem Kunststoff und einer inneren sowie einer äusseren Schicht aus einem anderen Kunststoff.

Verfahren zum Herstellen von Vorformlingen in einer Spritzgussform sind bekannt. Beispielsweise offenbart die EP 0 376 469 B ein Verfahren zum Herstellen eines Vorformlings, der in seinem Fussbereich fünfschichtig ausgebildet ist. Bei diesem Verfahren wird in den Formhohlraum der Spritzgussform zunächst eine Menge eines primären Materials und anschliessend eine dosierte Menge eines sekundären Materials eingespritzt. Das sekundäre Material bildet im primären Material einen Kern. Anschliessend wird ein weiteres Material eingespritzt, das den Formhohlraum auffüllt und in einem fussbildenden Abschnitt eine weitere Kernschicht bildet. Der fussbildende Abschnitt wird dadurch zu einem fünfschichtigen Aufbau ausgebildet. Der nach diesem Verfahren hergestellte Vorformling ist somit bereichsweise dreischichtig und im Fussbereich fünfschichtig. Das primäre Material ist im wesentlichen frisches PET und das sekundäre Material rezykliertes PET.

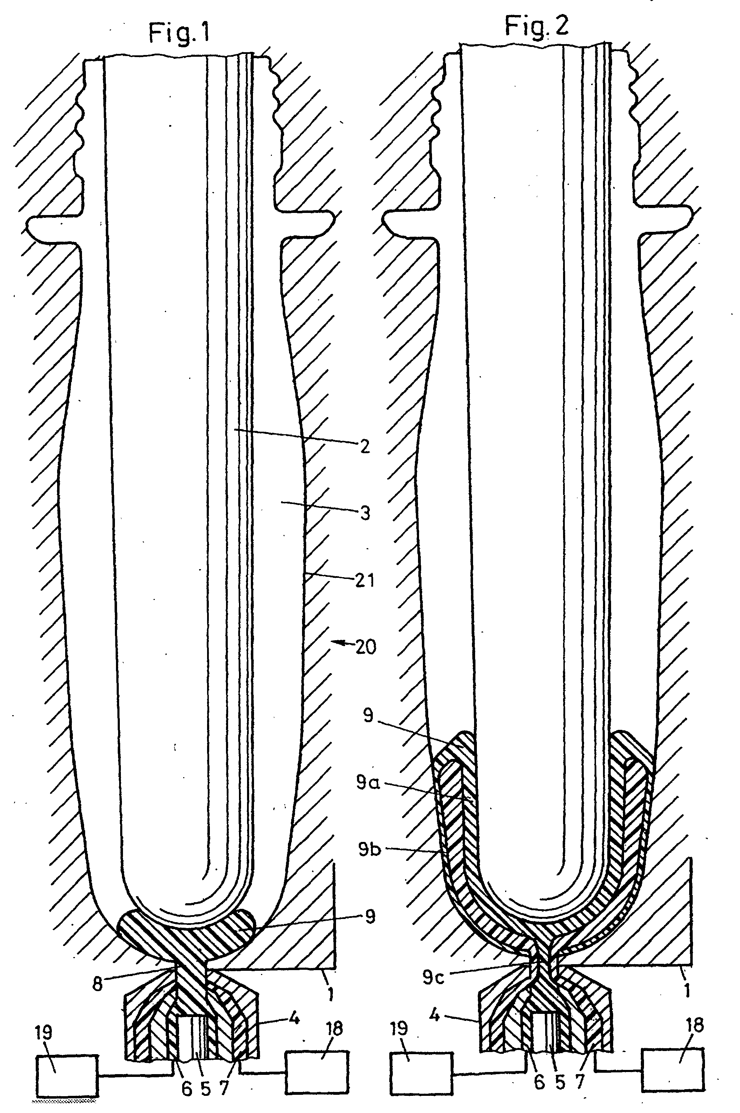

Die EP 0 380 215 offenbart ein Verfahren zur Herstellung eines mehrschichtigen Vorformlings, wobei beim Verfahren nach den Figuren 2 bis 4 zwei Materialien durch Parallelspritzen in einen Formhohlraum eingespritzt werden. Das Kernmaterial ist EVOH, das eine Barrierschicht bildet, die aufgrund des hohen Herstellungspreises dieses Materials möglichst dünn sein soll. Rezyklat eignet sich als Barrierematerial nicht.

Der Erfindung liegt die Aufgabe zugrunde, ein Verfahren der genannten Gattung zu schaffen, mit dem die Herstellung eines Vorformlings mit einem höheren, verglichenen mit dem nächstliegenden Stand der Technik Anteil an rezykliertem PET möglich ist.

Die Aufgabe ist gemäss Anspruch 1 gelöst. Wesentlich ist, dass in einer Hauptphase durch paralleles Einspritzen gleichzeitig erstes Material und Rezyklat in den Formhohlraum eingebracht werden. Mit diesem Verfahren ist es möglich, den Anteil des Rezyklats in einem vorderen Bereich des Vorformlings und insbesondere im Bereich eines Gewindes wesentlich zu erhöhen. Das Rezyklat umfliesst somit im Bereich der Einspritzöffnung das erste Material. Damit kann die äussere Schicht des ersten Materials auch im Bereich eines Gewindes mit einer wesentlich geringeren Dicke als bisher ausgebildet werden. Die Dicke des Kerns und damit der Anteil des Rezyklats lässt sich damit weiter wesentlich erhöhen. Insbesondere kann erreicht werden, dass der Anteil des Rezyklats im vorderen Bereich des Vorformlings, der ein Gewinde für einen Verschluss aufweist, wesentlich höher sein kann als bisher.

Der erfindungsgemässe Vorformling kennzeichnet sich dadurch aus, dass die innere Schicht des ersten Materials wesentlich dicker ist als die äussere Schicht aus diesem Material. Zudem erstreckt sich der Kern des Rezyklates bis in den Gewindebereich des Halses und bildet dort einen wesentlichen Anteil. Der Vorformling ist vorzugsweise im wesentlichen überall höchstens dreischichtig. In der Mitte des Fussbereichs kann er einschichtig oder zweischichtig sein.

Ein Ausführungsbeispiel der Erfindung wird nachfolgend anhand der Zeichnung näher erläutert. Es zeigen:
Figur 1 schematisch einen Querschnitt durch einen Teil einer Spritzgussvorrichtung und eine Vorphase des erfindungsgemässen Verfahrens,
Figur 2 schematisch die Hauptphase des erfindungsgemässen Verfahrens,
Figur 3 schematisch die Schlussphase des erfindungsgemässen Verfahrens, und
Figur 4 einen Schnitt durch einen nach dem erfindungsgemässen Verfahren hergestellten Vorformling.

Die Figur 1 zeigt eine Spritzgussvorrichtung 20 mit einem Spritzgusswerkzeug 4 und einer Spritzgussform 1. Das Spritzgusswerkzeug 4 weist eine Düsen- oder Einspritzöffnung 8 auf, die mit einem ersten Kanal 6 sowie einem zweiten Kanal 7 verbunden ist. Diese Kanäle 6 und 7 sind wiederum mit getrennten Vorratsbehälter 18 und 19 eines ersten Materials 9 und eines Rezyklats 10 verbunden. Ein Verschlusskörper 5 ist achsial beweglich, derart, dass durch die Düsenöffnung 8 Material aus dem Vorratsbehälter 18 oder aus dem Vorratsbehälter 19 oder aus beiden Vorratsbehältern 18 und 19 parallel eingespritzt werden kann. Beide Vorratsbehälter 18 und 19 sind vollständig voneinander getrennt. Der Vorratsbehälter 18 besteht aus einem Rezyklat, vorzugsweise PET. Der Vorratsbehälter 19 besteht aus einem frischen, thermoplastischen Kunststoff, vorzugsweise ebenfalls PET. Vorrichtungen zum Dosieren von Mengen aus den beiden Vorratsbehältern 18 und 19 sind dem Fachmann gut bekannt und werden hier deshalb nicht näher erläutert.

Das erfindungsgemässe Verfahren kann in eine Vorphase, eine Hauptphase sowie eine Schlussphase unterteilt werden. Bei der Vorphase wird gemäss Figur 1 eine dosierte Menge eines thermoplastischen Kunststoffs 9 aus dem Vorratsbehälter 19 durch den Kanal 6 und die Düsenöffnung 8 in den Hohlraum 3 eingespritzt. Der Hohlraum 3 wird lediglich in einen unteren Teilbereich gefüllt. Der Kern 2 sowie der äussere Formkörper 21 sind mit dem eingespritzten Kunststoff 9 in Berührung und kühlen diesen in anliegenden Bereichen sofort ab. Der eingespritzte Kunststoff 9 erstarrt in der Nähe des Kerns 2 beziehungsweise des Formkörpers 21 und bleibt zwischen diesen Schichten fliessfähig. Der Kunststoff 9 bildet ein erstes Material.

In der Hauptphase wird gemäss Figur 2 thermoplastischer Kunststoff 9 aus dem vorratsbehälter 19 und gleichzeitig Rezyklat 7 aus dem Vorratsbehälter 18 in den Formhohlraum 3 eingespritzt. Bei dieser Paralleleinspritzung bildet das erste Material 9 durch eine randständig erstarrte Schicht 9a und eine ebenfalls randständig erstarrte Schicht 9b eine Art Tunnel, in welchem das Rezyklat 10 gegen das vordere Ende des Formhohlraumes 3 fliesst. Wesentlich ist nun, dass das Rezyklat 7 wie ersichtlich aussen und das erste Material 9 innen eingespritzt werden. Dadurch ist die Schichtdicke der äusseren Schicht 9b geringer als diejenige der inneren Schicht 9a, wie die Figur 2 erkennen lässt. Die Hauptphase ist abgeschlossen, sobald die Front des ersten Materials 9 etwa den Bereich eines Gewindes 14 erreicht hat. Der Formhohlraum 3 ist somit beim Abschluss der Hauptphase noch nicht ganz gefüllt.

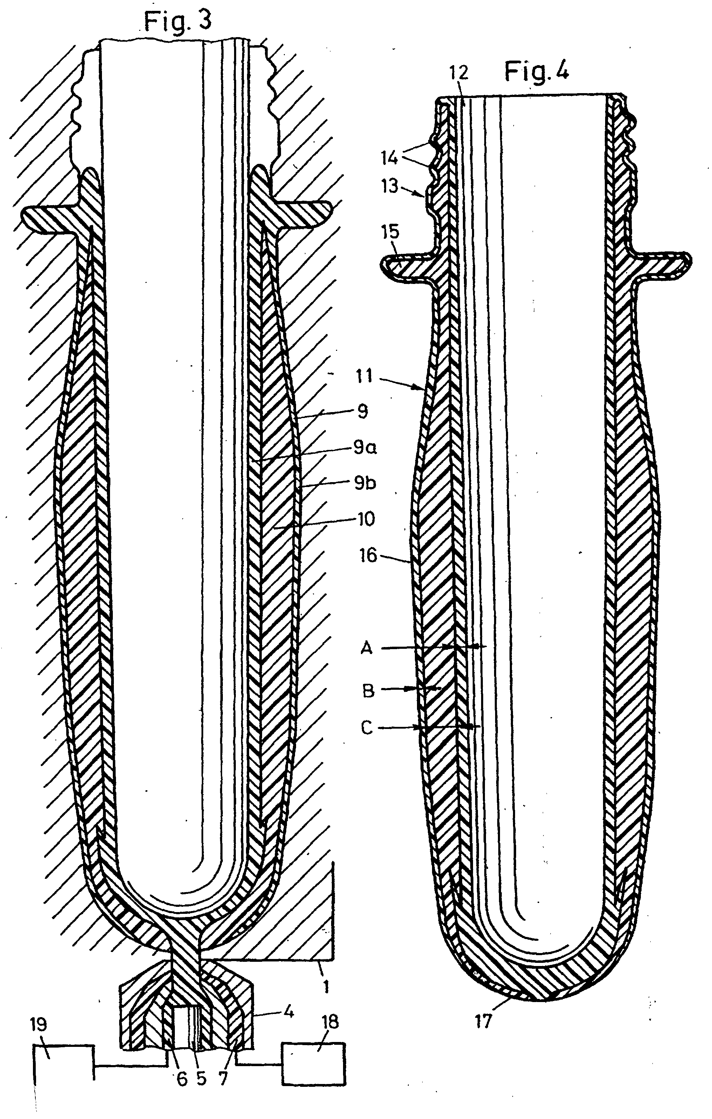

In einer Schlussphase gemäss Figur 3 wird nun der Formhohlraum 3 mit Material aus dem Vorratsbehälter 19 aufgefüllt. Durch die Öffnung 8 wird somit in dieser Schlussphase lediglich noch erstes Material 9 durch die Öffnung 8 in den Formhohlraum 3 eingespritzt. Hierbei verbreitert sich das erste Material 9 nahe der Einspritzöffnung 8 und verdrängt dabei Rezyklat 10, das in den Bereich des Gewindes 13 verdrängt wird. Sobald der Hohlraum 3 vollständig gefüllt ist, kann nach entsprechender Abkühlung der Vorformling 11 entformt werden.

Wie die Figur 4 zeigt, ist die Schichtdicke A der inneren Schicht 9a um ein mehrfaches grösser als die Schichtdicke B der äusseren Schicht 9b. Die vergleichsweise dicke Schicht 9a bildet eine Schutzschicht, die eine Diffusion von Giftstoffen aus dem Kern 10 nach innen wirksam verhindert. Die Schichtdicke C der Kernschicht 10 ist im Bereich des Rumpfes 16 besonders stark. In einem Fussbereich 17 dominiert jedoch die innere Schicht 9a und im Angussbereich 17 ist schliesslich lediglich diese Schicht 9a vorhanden. Der Vorformling 11 ist somit in diesem Bereich einschichtig. Wie ebenfalls die Figur 4 deutlich zeigt, ist in einem Bereich eines Gewindes 14 und eines Kragens 15 der Vorformling 11 ebenfalls dreischichtig und auch hier ist die Schichtdicke der inneren Schicht 9a um ein mehrfaches grösser als die Schichtdicke der äusseren Schicht 9b. Im Bereich einer Mündung 12 ist das Rezyklat vom ersten Material 9 umschlossen. Der gesamte Gewichtsanteil des Rezyklats beträgt beim Vorformling 11 wenigstens 40%, vorzugsweise 50 bis 60 Gewichtsprozent. Für die Erfindung ist somit wesentlich, dass der Vorformling 11 einen Anteil an Rezyklat 10 von wenigstens 50 Gwe% der Gesamtmenge aufweist und gleichzeitig die innere Schicht 9a im kritischen Fussbereich mindestens 20% der Vorformlingstärke ausmacht.

## Patentansprüche

1. Verfahren zum Herstellen eines Vorformlings (11) in einer Spritzgussform (1), wobei in einen Formhohlraum (3) eine vorbestimmte Menge eines ersten Materials (9) eingespritzt wird und zur Bildung eines Kerns (10) im gespritzten ersten Material (9) eine vorbestimmte Menge eines Rezyklats (10) in diesen Formhohlraum eingespritzt wird, **dadurch gekennzeichnet, dass** in einer Hauptphase das Rezyklat (10) durch Parallelspritzen zusammen mit einem Teil des ersten Materials (9) in den Formhohlraum (3) eingespritzt wird, dass beim Parallelspritzen im Bereich einer Einspritzöffnung (8) des Formhohlraums (3) das Rezyklat (10) aussen und das erste Material (9) innen eingespritzt wird, dass in einer Schlussphase eine vorbestimmte Menge des ersten Materials (9) eingespritzt wird und hierbei Rezyklat (10) bis in einen vorderen Abschnitt des Formhohlraumes (3) weitergeschoben wird, derart, dass das Rezyklat sich bis in den Bereich einer Mündung (12) des Vorformlings erstreckt und dass die Gesamtmenge an gespritztem Rezyklat (10) gleich oder grösser ist als die Gesamtmenge am ersten Material (9).

2. Verfahren nach Anspruch 1, **dadurch gekennzeichnet, dass** beim Paralleleinspritzen das erste Material (9) und das Rezyklat (10) im Spritzgusswerkzeug (4) in koaxialen Kanälen (6, 7) der Einspritzöffnung (8) zugeführt werden, wobei das Rezyklat (10) durch den äusseren Kanal (7) zugeführt wird.

3. Verfahren nach Anspruch 1 oder 2, **dadurch gekennzeichnet, dass** in einer Vorphase lediglich eine vorbestimmte Menge des ersten Materials (9) in den Formhohlraum (3) eingespritzt wird.

4. Vorformling zum Blasformen eines Behälters, hergestellt gemäss Anspruch 1, mit einem als Hals (13) ausgebildeten Bereich, einem einen Rumpf (16) bildenden Bereich und einem einen Boden oder Fussbereich (17) bildenden Bereich, mit einem Kern (10) aus rezykliertem Kunststoff und einer inneren sowie einer äusseren Schicht (9a, 9b) aus einem anderen Kunststoff (9), **dadurch gekennzeichnet, dass** die genannte innere Schicht (9a) um ein mehrfaches dicker ist als die äussere Schicht (9b).

5. Vorformling nach Anspruch 4, **dadurch gekennzeichnet, dass** der Kern (10) sich bis in den Bereich eines Gewindes (14) des Halses (13) erstreckt.

6. Vorformling nach Anspruch 4 oder 5, **dadurch gekennzeichnet, dass** er im wesentlichen überall höchstens dreischichtig ist.

7. Vorformling nach einem der Ansprüche 4 bis 6, **dadurch gekennzeichnet, dass** er im Bereich des Angusses einschichtig ist.

8. Vorformling nach einem der Ansprüche 4 bis 7, **dadurch gekennzeichnet, dass** auch im Bereich des Halses (13) die äussere Schicht (9b) um ein mehrfaches dünner ist als die innere Schicht (9a).

9. Vorformling nach einem der Ansprüche 6 bis 8, **dadurch gekennzeichnet, dass** der Gewichtsanteil des Rezyklats (10) im Bereich von 50 bis 60% liegt.

## Claims

1. Method for producing a preform (11) in an injection mould (1), a predetermined amount of a first material (9) being injected into a mould cavity (3) and a predetermined amount of a recycled material (10) being injected into this mould cavity to form a core (10) in the injected first material (9),
**characterized in that**, in a main phase, the recycled material (10) is injected into the mould cavity (3) by parallel injection together with part of the first material (9), **in that**, during the parallel injection, the recycled material (10) is injected on the outside and the first material (9) is injected on the inside in the region of an injection opening (8) of the mould cavity (3), **in that**, in a final phase, a predetermined amount of the first material (9) is injected and, as this happens, recycled material (10) is pushed further into a front portion of the mould cavity (3) in such a way that the recycled material extends into the region of a mouth (12) of the preform and **in that** the total amount of injected recycled material (10) is equal to or greater than the total amount of the first material (9).

2. Method according to Claim 1, **characterized in that**, during the parallel injection, the first material (9) and the recycled material (10) are fed to the injection opening (8) in the injection mould (4) in coaxial channels (6, 7), the recycled material (10) being fed through the outer channel (7).

3. Method according to Claim 1 or 2, **characterized in that**, in a preliminary phase, only a predetermined amount of the first material (9) is injected into the mould cavity (3).

4. Preform for the injection moulding of a container, produced according to Claim 1, with a region formed as a neck (13), a region forming a body (16) and a region forming a base or foot region (17), with a core (10) of recycled plastic and an inner and an outer layer (9a, 9b) of a different plastic (9), **characterized in that** the said inner layer (9a) is several times thicker than the outer layer (9b).

5. Preform according to Claim 4, **characterized in that** the core (10) extends into the region of a thread (14) of the neck (13).

6. Preform according to Claim 4 or 5, **characterized in that** it is at most three-layered substantially everywhere.

7. Preform according to one of Claims 4 to 6, **characterized in that** it is one-layered in the region of the sprue.

8. Preform according to one of Claims 4 to 7, **characterized in that** the outer layer (9b) is several times thinner than the inner layer (9a) also in the region of the neck (13).

9. Preform according to one of Claims 6 to 8, **characterized in that** the proportion by weight of the recycled material (10) lies in the range of 50 to 60%.

## Revendications

1. Procédé pour fabriquer une préforme (11) dans un moule de coulage par injection (1), dans lequel, dans un espace creux du moule (3), on injecte une quantité prédéterminée d'un premier matériau (9) et pour la formation d'un noyau (10) dans le premier matériau injecté (9) on injecte une quantité prédéterminée d'un recyclat (10) dans cet espace creux du moule, **caractérisé en ce que** dans une phase principale, le recyclat (10) est injecté par injection parallèle conjointement avec une partie du premier matériau (9) dans l'espace creux du moule (3), **en ce que** lors de l'injection en parallèle dans la région d'une ouverture d'injection (8) de l'espace creux du moule (3) le recyclat (10) est injecté à l'extérieur et le premier matériau (9) à l'intérieur, **en ce que** dans une phase terminale, une quantité prédéterminée du premier matériau (9) est injectée et de ce fait le recyclat (10) est repoussé jusque dans une portion avant de l'espace creux du moule (3), de telle sorte que le recyclat s'étende jusque dans la région d'une embouchure (12) de la préforme et que la quantité totale de recyclat injectée (10) soit supérieure ou égale à la quantité totale du premier matériau (9).

2. Procédé selon la revendication 1, **caractérisé en ce que** lors de l'injection en parallèle, le premier matériau (9) et le recyclat (10) sont apportés dans l'outil de coulage par injection (4) dans des canaux coaxiaux (6, 7) de l'ouverture d'injection (8), le recyclat (10) étant apporté à travers le canal extérieur (7).

3. Procédé selon la revendication 1 ou 2, **caractérisé en ce que** dans une phase préalable, seulement une quantité prédéterminée du premier matériau (9) est injectée dans l'espace creux du moule (3).

4. Préforme pour mouler par soufflage un récipient, fabriquée selon la revendication 1, comprenant une région réalisée sous forme de col (13), une région formant une bosse (16) et une région formant un fond ou une région de base (17), avec un noyau (10) en matière plastique recyclée et une couche intérieure ainsi qu'une couche extérieure (9a, 9b) en une autre matière plastique (9), **caractérisée en ce que** ladite couche intérieure (9a) est plus épaisse de plusieurs facteurs que la couche extérieure (9b).

5. Préforme selon la revendication 4, **caractérisée en ce que** le noyau (10) s'étend jusque dans la région d'un filetage (14) du col (13).

6. Préforme selon la revendication 4 ou 5,
**caractérisée en ce qu'**elle est essentiellement principalement au maximum constituée de trois couches.

7. Préforme selon l'une quelconque des revendications 4 à 6, **caractérisée en ce qu'**elle est monocouche dans la région du culot d'injection.

8. Préforme selon l'une quelconque des revendications 4 à 7, **caractérisée en ce que** dans la région du col (13), la couche extérieure (9b) est plus mince de plusieurs facteurs que la couche intérieure (9a).

9. Préforme selon l'une quelconque des revendications 6 à 8, **caractérisée en ce que** la proportion pondérale du recyclat (10) est comprise dans la plage de 50 à 60%.
